# FASCICULE DE BREVET EUROPEEN

(11) **EP 0 493 176 B1**
(45) Date de publication et mention de la délivrance du brevet: **17.01.1996**
(21) Numéro de dépôt: 91403388.1
(22) Date de dépôt: 13.12.1991
(51) Int. Cl.: H04L 12/56

(54) **Dispositif pour la transmission par un réseau asynchrone, notamment un réseau de type ATM, de données de signalisation voie par voie regroupées dans une multitrame émise de manière synchrone en mode hors bande**
Vorrichtung zur Übertragung von Signalisierungsdaten in einem asynchronen Netz, insbesondere ATM-Netz, wobei diese Daten kanalweise in einem Multirahmen zusammengefasst und synchron, ausserhalb des Bandes übertragen werden
Device for transmitting in an asynchronous network, especially an ATM-network, channel-by-channel signalling data gathered in a multiframe synchronously transmitted out-of-band

(30) Priorité: 20.12.1990 FR 9015997
(43) Date de publication de la demande: 01.07.1992
(73) Titulaire: THOMSON-CSF, F-75008 Paris (FR)
(72) Inventeur: Grenot, Thierry, F-92045 Paris la Défense (FR); Tabouriech, François, F-92045 Paris la Défense (FR)
(74) Mandataire: Lincot, Georges

(56) Documents cités:
- EP-A- 0 355 797
- ISS'90 Conference Record Vol.2, 28 mai - 1 juin 1980, Stockholm, pp 35-44,IEEE, New York, US D.G.Fisher:introduction of ATM

## Description

La présente invention concerne les réseaux de transmission asynchrones, notamment les réseaux de type dit ATM *(Asynchronous* *Transfer Mode :* mode asynchrone de transfert).

Dans ces réseaux, des informations numériques sont transmises de façon discontinue sous forme de paquets, appelés « cellules d'information» en terminologie ATM. Ce mode de transmission consiste, au lieu d'émettre octet par octet, à constituer dans l'équipement terminal émetteur (la source de données) un paquet de bits au fur et à mesure de la création des données numériques, et à attendre d'avoir suffisamment d'informations pour remplir une cellule d'information complète et envoyer celle-ci sur le réseau.

L'équipement émetteur produit ainsi des cellules d'informations à une cadence variable, selon qu'il utilise ou non le canal (par exemple aucune cellule n'est émise pendant les instants de silence), ou selon la cadence variable à laquelle les informations numériques sont produites (par exemple dans le cas typique des signaux vidéo différentiels, dont le volume de données dépend du caractère plus ou moins mobile de l'image à transmettre).

La cellule d'information qui va transiter sur le réseau comprend d'une part un en-tête porteur d'une adresse ou « identifiant de canal virtuel» et d'autre part un champ utile porteur de l'information à transmettre.

Les cellules d'informations provenant de plusieurs émetteurs sont mêlées en un flux continu, avec éventuellement des cellules vides intercalaires, qui transite le long d'artères de communication à grand débit.

Les différentes artères du réseau relient une pluralité de noeuds, correspondant chacun à un équipement commutateur assurant le démultiplexage/multiplexage du flux de cellules en fonction de l'adresse contenue dans l'en-tête et des ressources disponibles à l'instant considéré.

L'une des particularités d'un réseau de type ATM tient au fait que le commutateur se contente de gérer exclusivement l'en-tête de chaque cellule d'informations, en déterminant, d'après l'en-tête de la cellule entrante, l'adresse de destination et en calculant à partir de ce paramètre un nouvel en-tête, correspondant au canal (virtuel) qui aura été affecté sur l'artère commutée en aval de ce noeud.

En particulier, il n'est opéré aucune vérification (contrôle d'erreur intrinsèque, protocole d'acquittement, etc.) sur les données transmises, les contrôles éventuels étant reportés aux deux extrémités de la ligne, c'est-à-dire aux deux équipements échangeant les informations, qui devront donc vérifier l'intégrité et la conformité des informations échangées.

Le plus souvent, le réseau ATM est toutefois connecté à un équipement opérant une transmission selon un autre mode que le mode ATM, soit que le réseau asynchrone soit relié à un équipement terminal d'un autre type, soit qu'il ne constitue en fait qu'un sous-ensemble d'un réseau plus étendu, comprenant par exemple un commutateur synchrone de type conventionnel auquel est relié le réseau asynchrone.

L'un des buts de la présente invention est en particulier, dans un tel cas où le réseau ATM doit être accouplé à un équipement ou commutateur préexistant d'un autre type, de permettre la transmission de données de signalisation émises de manière synchrone.

En effet, jusqu'à présent, les données de signalisation générées et reçues par les terminaux numériques d'équipement en mode synchrone dit «hors bande voie par voie» sont regroupées, conformément à la recommandation *G704* du CCITT, en une «multitrame», circulant sur un des intervalles de temps des trames transmises en mode synchrone.

Plus précisément, toujours conformément à la recommandation précitée, chaque trame est divisée en 31 unités temporelles, à savoir 30 unités temporelles affectées à la transmission des informations proprement dites (associées à 30 voies différentes) et 1 unité temporelle, à qui on affecte arbitrairement la 16^{ième} position dans la trame, contenant les données de signalisation associées à ces 30 voies.

Plus précisément, l'unité temporelle regroupant ces données de signalisation, également appelée «multitrame», contient une succession de 30 quadruplets dont chacun correspond à la donnée de signalisation (16 valeurs possibles) associée à chacune des 30 voies.

Dans ce mode classique de transmission, les trames synchrones acheminent donc simultanément les informations proprement dites (à une cadence typique de 64 kbit/s) et les données de signalisation (à 2 kbit/s) les bandes passantes correspondant à ces deux séries d'informations respectives étant distinctes, on parle ainsi de «signalisation hors bande».

Le mode de transmission ATM est entièrement différent, puisque, comme on l'a indiqué plus haut, le réseau ATM n'analyse pas le contenu des informations, et ne distingue donc pas entre informations proprement dites et données de signalisation.

Une solution possible, immédiate, consisterait à générer une cellule ATM à chaque quadruplet reçu, et à acheminer cette cellule dans la direction voulue.

Une telle solution est proposée dans l'article "A flexible network architecture for the introduction of ATM" par D. Fisher et d'autres, publié dans les Proceedings of the International Switching Symposium 1990, vol. 2, pages 35-44.

Cette solution serait cependant très lourde à mettre en oeuvre, car il serait nécessaire de générer et d'acheminer une cellule complète à chaque instant de récurrence de l'information, c'est-à-dire toutes les 2 ms (les cellules ATM sont de longueur fixe ; il est donc nécessaire de générer une cellule complète pour transmettre un simple quadruplet).

Une telle solution amènerait, outre sa lourdeur de mise en oeuvre, à créer un flux important de cellules, encombrant de façon non négligeable les diverses artères de communication du réseau ATM.

Pour pallier cet inconvénient, l'invention propose, essentiellement, d'analyser les différents quadruplets successifs de chaque voie, de détecter les changements d'états de ces quadruplets et de n'émettre une cellule que si le quadruplet correspondant considéré diffère du quadruplet précédent relatif à la même voie, c'est-à-dire, en d'autres termes, d'opérer en «mode transitionnel».

Dans ce cas, le principe de transmission ATM se révèle particulièrement avantageux, puisqu'il permet de n'envoyer la donnée de signalisation que lorsque cela est nécessaire (c'est-à-dire, en fait, relativement peu fréquemment étant donné que les données de signalisation ne prennent en général qu'un nombre relativement faible de valeurs au cours d'une même communication).

À l'opposé, dans une transmission synchrone classique, la donnée de signalisation est systématiquement émise, occupant en permanence un canal complet (le canal de signalisation à 2 kbit/s) pour 30 canaux d'information.

À cet effet, le dispositif de l'invention, qui est du type précité, c'est-à-dire un dispositif pour la transmission par un réseau asynchrone, notamment un réseau de type ATM, de données de signalisation voie par voie regroupées dans une multitrame émise de manière synchrone en mode hors bande, les informations étant véhiculées, dans le réseau asynchrone, par paquets de bits de données formés chacun d'une cellule d'information comprenant d'une part un en-tête porteur d'une adresse et d'autre part un champ utile porteur de l'information à transmettre, est caractérisé en ce qu'il comprend :
- à l'émission :
   . des moyens pour acquérir les données de signalisation de chaque voie de la multitrame,
   . des moyens pour détecter les changements d'état de ces données, et
   . des moyens pour générer sur le réseau, à chaque changement ainsi détecté, une cellule d'information contenant la nouvelle donnée de signalisation et l'adresse associée à la voie correspondante,
- à la réception:
   . des moyens pour acquérir du réseau les cellules d'information contenant des données de signalisation,
   . des moyens pour mémoriser ces données de signalisation entre chaque changement d'état correspondant, et
   . des moyens pour insérer les données ainsi mémorisées dans une multitrame et émettre cette dernière de manière synchrone en mode hors bande.

De préférence, lesdits moyens pour générer les cellules d'information génèrent au surplus, de façon répétitive et indépendamment des changements d'état, une cellule d'information contenant la donnée de signalisation courante et l'adresse relative à la voie correspondante.

De préférence également, la cellule d'information générée à l'émission contient, dans son champ utile porteur de l'information à transmettre, une forme redondante de la nouvelle donnée de signalisation, des moyens étant prévus à la réception pour contrôler la conformité de cette nouvelle donnée telle que reçue et opérer une correction éventuelle.

D'autres caractéristiques et avantages de l'invention apparaîtront à la lecture de la description détaillée ci-dessous, faite en référence aux dessins annexés.

La figure 1 représente, de façon schématique, un réseau de transmission asynchrone reliant une pluralité d'équipements terminaux opérant en mode synchrone, notamment en ce qui concerne la transmission des informations de signalisation.

La figure 2 montre la structure générale de la trame émise dans le réseau synchrone pour chaque intervalle de temps correspondant.

La figure 3 montre la structure générale de la multitrame servant, à l'intérieur de cette trame, à la transmission des données de signalisation par ce même réseau synchrone.

La figure 4 montre la structure générale d'une cellule d'information transmise par le réseau ATM.

La figure 5 montre la structure des principaux éléments du joncteur d'interfaçage selon l'invention, placé entre le réseau synchrone et le réseau asynchrone.

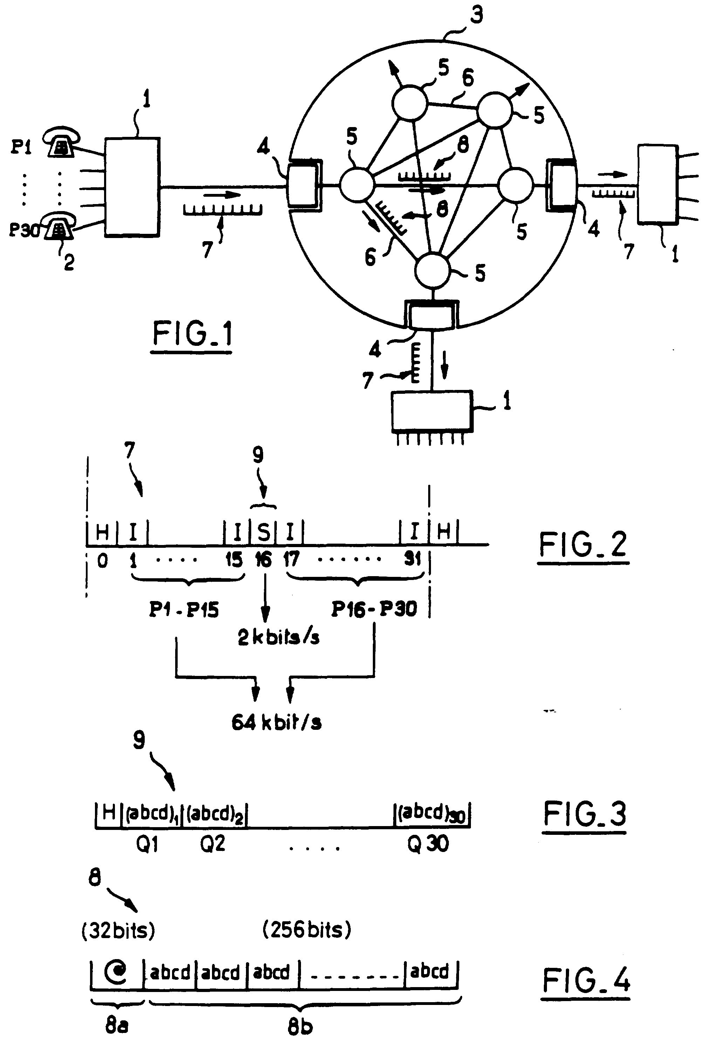

Sur la figure 1, les références 1 désignent des équipements numériques terminaux gérant chacun une pluralité de postes téléphoniques 2 (ou autres équipements de transmission de données par le réseau commuté), référencés P₁ à P₃₀.

Ces terminaux 1 émettent, de façon en elle-même connue, des trames synchrones multiplexées, à une cadence typique de 2 Mbit/s.

L'objet de l'invention est d'assurer l'interfaçage de ces liaisons synchrones avec un réseau de transmission ATM, symbolisé en 3, par l'intermédiaire de joncteurs 4 assurant la conversion appropriée des signaux et la conversion de modes de transmission.

Ce réseau ATM 3 comporte une pluralité de noeuds de réseau 5, reliés entre eux par des artères à grand débit 6.

Sur le réseau synchrone, les informations transitent sous forme de trames multiplexées 7, dont l'une est représentée plus en détail sur la figure 2, tandis que sur le réseau asynchrone les informations transitent sous forme de cellules individuelles indifférenciées, référencées 8 et dont l'une est représentée plus en détail sur la figure 4.

L'invention peut notamment s'appliquer au traitement d'un transfert continu d'informations par train numérique à 2,048 Mbit/s dans un réseau ATM utilisant des artères à grande vitesse à 34,368 Mbit/s transportant des cellules de 32 octets de charge utile, correspondant à la génération au noeud source d'une cellule toutes les 125 µs.

Le procédé n'est cependant, bien entendu, pas limité à ces valeurs numériques, et peut s'appliquer à d'autres valeurs de débit d'artère et de service.

En ce qui concerne la trame synchrone 7, comme illustré figure 2, celle-ci comprend pour chaque intervalle temporel (c'est-à-dire pour chaque intervalle compris entre les traits mixtes) une division du temps en 32 unités temporelles, comprenant :
- un en-tête H permettant de repérer le début de la trame (voie 0),
- 30 blocs d'information, correspondant aux données proprement dites transmises par chacun des postes P₁ à P₃₀ (voies 1 à 15 et 17 à 31), et
- une unité temporelle regroupant l'ensemble des données de signalisation associées aux postes P₁ à P₃₀ (multitrame sur voie 16).

Cette dernière unité temporelle, référencée 9, est illustrée plus en détail figure 3, où l'on peut voir qu'elle comporte, outre un en-tête H, une série de 30 quadruplets Q₁ à Q₃₀ formés chacun de 4 bits *abcd* donnant la signalisation associée à la voie correspondante.

La figure 4 représente la structure des cellules 8 transmises par le réseau asynchrone, qui comportent chacune un en-tête 8a contenant une adresse servant au routage de la cellule, et un champ utile 8b porteur de l'information à transmettre proprement dite. Les dimensions des champs 8a et 8b sont, typiquement, de 32 et 256 bits respectivement, mais d'autres dimensions peuvent être envisagées aussi bien.

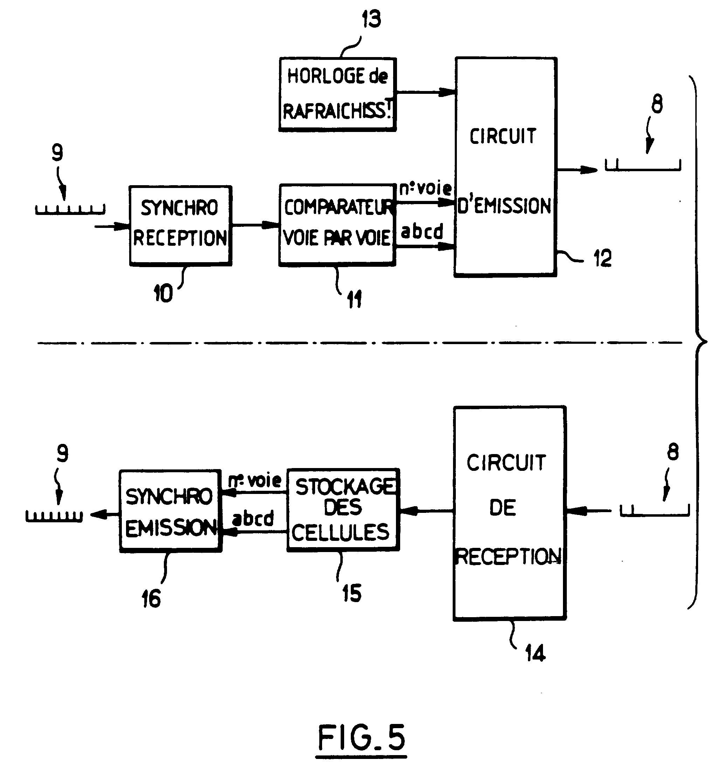

On va maintenant décrire, en référence à la figure 5, la structure et le fonctionnement du joncteur permettant d'assurer l'interfaçage entre réseau synchrone et réseau asynchrone, c'est-à-dire, en d'autres termes, permettant de convertir les multitrames 9 en cellules ATM individuelles 8, et réciproquement (on ne décrira pas le mécanisme classique permettant d'extraire la multitrame 9 de la trame 7 ou de l'y insérer).

Essentiellement, ce joncteur comporte:
- du côté émission (c'est-à-dire dans le sens « synchrone vers asynchrone») :
   . un circuit synchrone de réception 10 permettant d'acquérir les éléments binaires de la multitrame 9,
   . un circuit comparateur 11, destiné à mettre en évidence les changements d'état, entre deux multitrames successives, des quadruplets associés à chaque voie,
   . une horloge cyclique de rafraîchissement 13, et
   . un circuit d'émission 12, associant à chacune des voies, les éléments nécessaires pour la génération d'une cellule ATM 8 contenant les informations utiles à transmettre et la destination de cette information,
- du côté réception (c'est-à-dire dans le sens «asynchrone vers synchrone») :
   . un circuit de réception 14 permettant d'acquérir du réseau ATM les cellules individuelles 8 associées à chaque voie,
   . un circuit 15 permettant de stocker les informations correspondantes, et donc de connaître en permanence, entre deux changements d'état, la valeur de la donnée de signalisation associée à chacune des voies, et
   . un circuit 16 permettant d'insérer dans la multitrame sortante 9 les valeurs des donnée de signalisation de l'ensemble des voies.

Ainsi qu'on l'a indiqué plus haut, le principe de l'invention consiste à n'émettre dans le réseau ATM que lorsqu'il y a changement de valeur du quadruplet associé à une voie ; dans ce cas, on émet à destination du système homologue distant une cellule 8 comportant, comme illustré figure 4, le numéro de la voie (dans le champ d'adresse 8a) et la nouvelle valeur du quadruplet *abcd* (dans le champ d'information 8b).

Ceci permet une très importante économie de ressources à l'intérieur du réseau ATM, du fait que les changements d'états sont (le plus souvent) bien moins fréquents que la période de récurrence d'une multitrame.

Afin de permettre l'initialisation du système et de pallier les éventuelles pertes d'informations dans le réseau ATM, les informations ci-dessus sont également émises (ou réémises) à chaque période de l'horloge de rafraîchissement 13, donc indépendamment du fait qu'il y ait eu ou non changement de la valeur du quadruplet.

De plus, afin de s'affranchir de la plupart des erreurs pouvant survenir au cours du transfert des informations, et compte tenu du fait que les informations transportées (4 bits) n'occupent qu'une faible partie du champ disponible (256 bits) dans la cellule ATM, il est aisé d'introduire une forte redondance dans le corps de la cellule, une détection et une correction d'éventuelles erreurs étant alors faites dans le circuit de réception 14 lors de l'acquisition de la cellule correspondante. On a illustré ceci figure 4 par la répétition du motif *abcd.*

Le fonctionnement du système dont on vient d'exposer la structure est le suivant.

Tout d'abord, le circuit 10 de synchronisation de la réception acquiert la multitrame entrante, et maintient le synchronisme du dispositif sur cette multitrame.

Le circuit comparateur 11 examine, voie par voie, le contenu de la multitrame courante (la n^{ième}) et compare ce contenu à celui de la multitrame précédente (la n-1^{iéme}). S'il détermine un quadruplet (*abcd*)_{i,n} différent du quadruplet (*abcd*)_{i,n-1} relatif à la même voie (la i^{iéme}), il prévient le circuit d'émission 12 qui va alors former une cellule ATM dont l'en-tête est affecté au numéro de voie concerné (i) et contenant dans son champ d'informations utiles la valeur du nouveau quadruplet (*abcd*)ₙ. Cette cellule est alors émise dans le réseau ATM.

Lorsque la cellule parvient au circuit de réception 14 du joncteur distant (le joncteur reliant le réseau ATM à l'équipement terminal destinataire de l'information), ce circuit de réception détermine quelle est la voie concernée (d'après l'en-tête de la cellule) et quel est le nouveau quadruplet (d'après le champ d'information de la cellule). Ce quadruplet est alors mémorisé dans le circuit de stockage 15 puis inséré à l'instant approprié, par le circuit 16, dans la multitrame sortante, et dans toutes les multitrames suivantes jusqu'à détection d'une nouvelle valeur de multiplet sur cette voie. On notera à cet égard que le circuit 16 d'émission synchrone génère systématiquement, à la différence du circuit d'émission asynchrone 12, une multitrame à chaque période de récurrence du réseau synchrone.

## Revendications

1. Un dispositif pour la transmission par un réseau asynchrone (3), notamment un réseau de type ATM, de données de signalisation (S) voie par voie regroupées dans une multitrame (9) émise de manière synchrone en mode hors bande, les informations étant véhiculées, dans le réseau asynchrone, par paquets de bits de données formés chacun d'une cellule d'information (8) comprenant d'une part un en-tête porteur d'une adresse et d'autre part un champ utile porteur de l'information à transmettre,
dispositif caractérisé en ce qu'il comprend :
- à l'émission:
. des moyens (10) pour acquérir les données de signalisation de chaque voie de la multitrame,
. des moyens (11) pour détecter les changements d'état de ces données, et
. des moyens (12) pour générer sur le réseau, à chaque changement ainsi détecté, une cellule d'information contenant la nouvelle donnée de signalisation et l'adresse associée à la voie correspondante,
- à la réception :
. des moyens (14) pour acquérir du réseau les cellules d'information contenant des données de signalisation,
. des moyens (15) pour mémoriser ces données de signalisation entre chaque changement d'état correspondant, et
. des moyens (16) pour insérer les données ainsi mémorisées dans une multitrame et émettre cette dernière de manière synchrone en mode hors bande.

2. Le dispositif de la revendication 1, dans lequel lesdits moyens (12) pour générer les cellules d'information génèrent au surplus, de façon répétitive et indépendamment des changements d'état, une cellule d'information contenant la donnée de signalisation courante et l'adresse relative à la voie correspondante.

3. Le dispositif de la revendication 1, dans lequel lesdits moyens (12) pour générer les cellules d'information génèrent des cellules d'information contenant chacune, dans son champ utile porteur de l'information à transmettre, une forme redondante de la nouvelle donnée de signalisation, des moyens étant prévus à la réception pour contrôler la conformité de cette nouvelle donnée telle que reçue et opérer une correction éventuelle.

## Claims

1. Device for the transmission, by an asynchronous network (3), notably an ATM-type network, of signalling data elements (S), channel by channel, assembled in a multiframe (9) transmitted synchronously in out-of-band mode, the information elements being conveyed, in the asynchronous network, in packets of data bits, each packet being formed by an information cell (8) comprising, firstly, a header carrying an address and, secondly, a useful field carrying the information to be transmitted, a device characterized in that it comprises:
- at transmission:
* means (10) to acquire the signalling data elements of each channel of the multiframe;
* means (11) to detect changes of state of these data elements; and
* means (12) for the generation, on the network, at each change thus detected, of an information cell containing the new signalling data element and the address associated with the corresponding channel;
- at reception:
* means (14) for acquiring, from the network, the information cells containing signalling date elements;
* means (15) to memorize these signalling data elements between each corresponding change of state; and
* means (16) to insert the data elements thus memorized into a multiframe and to transmit this multiframe synchronously in out-of-band mode.

2. Device according to Claim 1, wherein said means (12) to generate the information cells generate, in addition, repetitively and independently of the changes of stage, an information cell containing the current signalling data element and the address relating to the corresponding channel.

3. Device according to Claim 1, wherein said means (12) to generate the information cells generate information cells each containing a redundant form of the new signalling data element in its useful field carrying the information element to be transmitted, means being provided at reception to check the conformity of this new data element as received and to carry out a correction if necessary.

## Patentansprüche

1. Vorrichtung zur Übertragung von Signalisationsdaten (S) Kanal für Kanal über ein asynchrones Netz (3), insbesondere ein ATM-Netz, wobei die Daten in einem Vielfachrahmen (9) zusammengefaßt sind, der synchron im sogenannten "Modus außerhalb des Bandes" ausgesendet wird und wobei die Informationen im asynchronen Netz in Form von Datenpaketen verlaufen, die je von einer einerseits einen Vorspann mit einer Adresse und andererseits ein Nutzfeld mit den zu übertragenden Informationen enthaltenden Informationszelle (8) gebildet werden,
dadurch gekennzeichnet, daß sie aufweist:
- auf der Sendeseite
* Mittel (10), um die Signalisationsdaten jedes Kanals des Vielfachrahmens aufzunehmen,
* Mittel (11), um die Zustandsänderungen dieser Daten zu erfassen,
* und Mittel (12), um in dem Netz bei jeder erfaßten Zustandsänderung eine Informationszelle zu erzeugen, die die neue Signalisationsangabe und die dem entsprechenden Kanal zugeordnete Adresse enthält,
- auf der Empfangsseite
* Mittel (14), um aus dem Netz die Informationszellen aufzunehmen, die Signalisationsdaten enthalten,
* Mittel (15), um diese Signalisationsdaten zwischen entsprechenden Zustandswechseln zu speichern,
* und Mittel (16), um die so gespeicherten Daten in einen Vielfachrahmen einzufügen und den Vielfachrahmen synchron im sogenannten "Modus außerhalb des Bandes" auszusenden.

2. Vorrichtung nach Anspruch 1, bei der die Mittel (12) zur Erzeugung der Informationszellen zusätzlich, wiederholt und unabhängig von den Zustandsänderungen eine Informationszelle erzeugen, die die laufende Signalisationsangabe sowie die auf den entsprechenden Kanal bezogene Adresse enthält.

3. Vorrichtung nach Anspruch 1, bei der die Mittel (12) zur Erzeugung der Informationszellen Informationszellen erzeugen, die je in ihrem Nutzfeld, das zu übertragende Informationen trägt, eine redundante Form der neuen Signalisationsangabe enthalten, wobei Mittel beim Empfang vorgesehen sind, um die Fehlerfreiheit dieser neuen so empfangenen Angabe zu kontrollieren und eine eventuelle Korrektur durchzuführen.
